# EUROPEAN PATENT APPLICATION

(11) **EP 1 918 819 A1**
(43) Date of publication of application: **07.05.2008**
(21) Application number: 06123239.3
(22) Date of filing: 31.10.2006
(51) Int. Cl.: G06F 11/30, G06F 11/273

(54) **Method and system for remote servicing of intelligent devices**

(71) Applicant: Agfa Graphics N.V., 2640 Mortsel (BE)
(72) Inventor: Dille, Raf, 2640, Mortsel (BE); Peeters, Tom, 2640, Mortsel (BE)
(74) Representative: Goedeweeck, Rudi

(57) **Abstract**

A system and a method for remote servicing an intelligent device, such as for example a graphic arts plate-setter or an inkjet printer, comprises a collector tool and an agent tool. The collector tool collects or sets parameters that describe a status of the intelligent device and communicates these parameters with the agent tool under a form of XML-structured data. The agent tool interprets the structured data and communicates over a network with a service tool operated by a service operator. The interpretation preferably involves filtering out and/or transforming parameters selected by the service operator. The service operator is able to interactively get and set device parameters. The invention reduces bandwidth and storage requirements. The modular approach using a device specific collector tool and a generic agent tool also reduces development time and cost of said generic agent tool compared to an approach that uses a device specific agent tool.

## Description

### FIELD OF THE INVENTION

The invention relates to the field of remote management and servicing of intelligent devices and equipment, such as computers and devices comprising embedded firmware or software.

### BACKGROUND OF THE INVENTION

The invention is particularly relevant in the context of a business that is responsible to maintain and service computers and electronic devices in the field.

Examples of such devices in the graphic arts industry comprise for example the plate-setters or printers that are installed at print producer sites.

Examples of such devices in the health care industry comprise electronic diagnostic equipment or equipment for imaging diagnostic pictures at hospitals or physician offices.

In the above applications, a high level of reliability is expected of equipment that is technically complex.

A first measure to improve reliability is to properly maintain the equipment. Simple maintenance is usually performed by the end-user. More extensive maintenance, for example maintenance that requires replacement of parts or recalibration is usually performed by a service technician in the field. The maintenance can be scheduled periodically or may be driven by the use of the equipment. The latter option is usually preferable since it is more cost effective.

Sophisticated devices as in the above examples are usually controlled by firmware in combination with device driver software that resides on a host computer to which said devices are connected.

Firmware typically resides on electrically permanent memory in the peripheral device, such as FPGA, and typically manages the various sensors, actuators, user interfaces and communication channels of the device.

Device driver software typically resides on a mass storage memory of a host computer and is called upon when said computer is booted. A device driver enables the operating system of the host computer to interact with a peripheral device at an abstract level.

A device that is controlled by firmware and software contains intelligence and can therefore be referred to as an intelligent device.

Input based on experience of using a device in the field or new developments in the development laboratory sometimes mandate an update of the software or the firmware.

Preferably such an update not only affects the software and firmware of newly shipped devices but also the devices that are already in the field. Such an update is sometimes called software maintenance.

Despite a good design and proper maintenance, equipment may occasionally break down and need repair or replacement parts. For the purpose of servicing the equipment, it can often be operated in a service mode. In such a service mode, which is normally only accessible by a qualified person, a service technician can "read" by means of a special user interface the status of the equipment and detect if there is an anomaly in the values of the different sensors. The service technician can also override the normal operation of the actuators and send special control signals to them to monitor how they react. In this way the servicing mode enables a service technician to diagnose the cause of a failure in order to determine which malfunctioning part he has to replace.

Traditionally, maintenance and service of devices and equipment are performed by service technicians in the field. This approach involves that a service technician has to travel to the geographical location of a device in order to provide it with service or maintenance. Especially in the case of devices that are geographically sparsely distributed, this situation potentially leads to a problem of unacceptable down-time of a device that requires urgent repair, and in general of high travel expenses and low productivity of the technicians.

Various products have recently been made available to the market to address this problem by providing to a service technician network connectivity to multiple and diverse intelligent devices.

The domain of this new category of software products is sometimes referred to as intelligent device management. The products are designed to enable the remote monitoring, managing, and servicing of intelligent devices over a public network such as for example the internet.

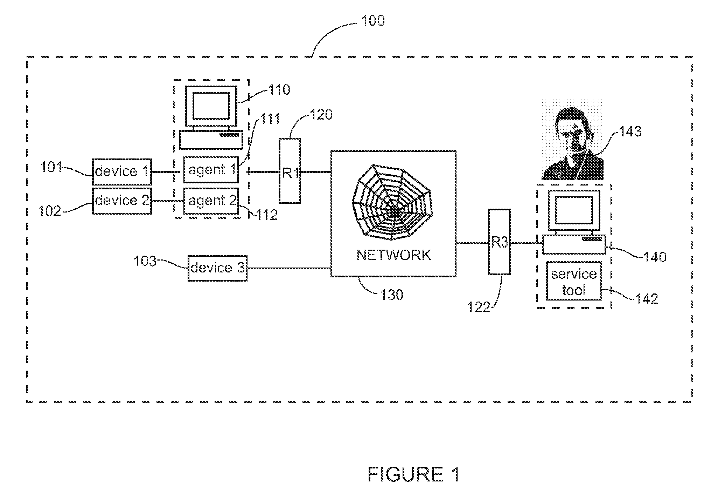

US 6,377,162 describes a medical diagnostic field service method and apparatus for communicating field service data to and from medical diagnostic systems. The system comprises at least one medical diagnostic system (e.g. a medical diagnostic scanner) and a remote service facility linked to said diagnostic system through a network. A service operator can communicate with the diagnostic system through a server and a network, for example to view an operational state of said diagnostic system. Figure 1 in the above referenced patent describes a representative architecture of such a system.

US 6,757,714 describes a system and a method in which a remote computer can obtain the state of a device through e-mail. The e-mail message can be automatically generated, for example if the status of a device has changed or if an error condition occurs. According to the patent, the message is send in a self describing language, such as XML.

US 7,046,134 discloses a system and a method to enable a remote service operator and user of a computer to share the same screen of a graphical user interface through a network connection.

The OSI-model describes a general framework to describe communications between computers, servers and intelligent devices over networks. It describes such communication networks in terms of a hierarchically structured plurality of abstraction layers starting from the physical link that connects computers physically up to the interaction of a computer with a human operator through an application.

Figure 1 shows a representative architecture of a state-of-the-art intelligent device management system.

Devices 101, 102 and 103 are three remote intelligent devices.

Devices 101 and 102 are connected with a host system 110. Two software agents 111 and 112 are running on a host system 110 that can communicate with said devices 101 and 102 respectively. These agents can also send and receive data through a router 120 connected to a network 130.

Device 103 is directly connected to the network 130.

A service technician 143 sits in front of workstation 140 on which a service tool software 142 is running. The service tool can communicate through a router 122 to the network 130.

A service technician 143 can interact with the service tool 142 running on workstation 140 to communicate through the network 130 with the software agents 111, 112 for example in order to consult a status or in order to change a setting of one of said devices 101 or 102.

Alternatively a service technician 143 can communicate directly with a device 103 through a network 130 to obtain a status or to set a parameter.

While the described state-of-the-art system depicted in Figure 1 provides most of the required functionality needed for diagnosing, servicing or updating an intelligent device remotely, it still has a number of drawbacks.

Because each specific device 101, 102 may be different and may have a specific architecture and specific technical characteristics, a prior art technique requires developing a specific software agent 111 and 112 for any given type or family of devices. In general, a custom or at least customized software or firmware interface is needed for different devices 101, 102 and 103.

Such an approach requires development time and therefore is costly. Furthermore it requires that a specific software application be installed at each customer site depending on the device that he uses. The logistics of distributing and maintaining separate software applications for different devices are complicated and lead to even more additional expenses.

Another disadvantage of prior art systems is that, when a status of an intelligent device 101 is requested by service tool 142, an agent 111 always sends all the values of all the variables of said status. This wastes precious bandwidth and processing power. Especially if a status comprises many variables, if many agents are simultaneously connected to a single service server or if an agent frequently reports a status to said service server, this results in heavy data processing requirements for said service server and an additional cost.

From this it is clear that a need exists for a better solution for the remote management of intelligent devices.

### SUMMARY OF THE INVENTION

The problems of a prior art system and method are effectively solved by a system and a method as claimed in the independent and dependent claims of the current application.

Specifically, the problem of having to develop a specific agent for each specific intelligent device or family of devices is resolved by splitting up said agent into a collector tool that directly communicates with an intelligent device and an agent tool that communicates with a service client tool through a network.

Preferably both the collector tool and the agent tool reside on a host computer.

According to one aspect of the current invention the collector and the agent tools exchange data in a well-structured form, such as for example in XML.

This exchange of well-structured data provides an additional abstraction layer that enables that the same service tool and agent tool can communicate with any type or family of devices, provided that the collector tool is adapted to communicate with the device. This modular approach significantly reduces software development time and cost.

According to another aspect of the invention, the agent tool is configured by intelligent device specific configuration data so that it is capable to interpret said well structured data to obtain interpreted data.

The interpreted data is communicated by said agent tool to a service server.

The purpose of the interpretation step is to reduce the amount of data that is communicated by an agent tool through a network to a service server.

This data reduction resolves the problem of bandwidth and processing power requirements in a prior art system.

Preferably the data that is exchanged between the service server and the agent tool can be transparently communicated through routers and firewalls.

Further advantages and embodiments will become clear from reading the description.

### BRIEF DESCRIPTION OF THE DRAWINGS

Figure 1 shows a prior art system for servicing intelligent devices over a network;
Figure 2 show a specific embodiment according to the current invention.

### DETAILED DESCRIPTION OF THE INVENTION

### description of a system

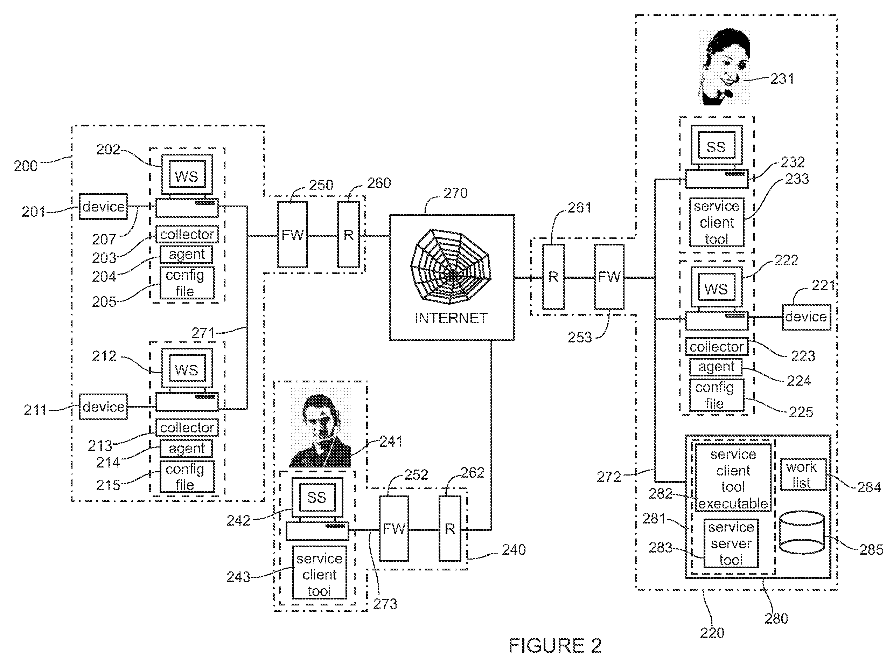

A typical architecture of a remote intelligent device management system according to the current invention is shown in Figure 2.

A number of intelligent devices 201, 211 are located at a first geographical location 200 and an intelligent device 221 located at a second geographical location 220. The intelligent devices in Figure 2 are the devices that are subject to service according to the current invention.

A device is said to be intelligent if it is able to communicate data that refers to its operation with an external data processing system such as a computer. Examples of intelligent devices include modern digital platesetters such as the Galileo family of products, printing devices such as the SherpaMatic family of proofing devices or the Dotrix digital printing press, all manufactured and marketed by Agfa-Gevaert NV in Mortsel Belgium.

According to a preferred embodiment of the invention, an intelligent device 201 is adapted to communicate with a data processing system such as a workstation 202 through a link 207. The nature of this link is not specific. It can for example be a serial port, a parallel port, a USB link, Ethernet, WiFi, Bluetooth, IrDA or any other link. The communication protocol can be a standard protocol such as Internet Protocol (IP) or a proprietary protocol. Similarly, the transport protocol can also be a standard protocol such as TCP or a proprietary protocol. In one embodiment, the data processing system is not physically a different system, but a system that is integrated in the intelligent device itself.

A collector tool 203 and an agent tool 204 software are running on a data processing system 202 that is connected to an intelligent device 201. The data processing system 202 is further connected to a local network 271 through a network adaptor (not shown in Figure 2).

Preferably, a data processing system 202 connected to an intelligent device 201 also comprises a registry, said registry comprising information for the initialization and operation of said collector tool and agent tool.

A collector tool 203 is designed to directly communicate with an intelligent device 201. It can read or set operating parameters in the intelligent device 201. From this follows that a collector tool 203 is specifically designed for a given intelligent device or family of related intelligent devices, taking into account the specific parameters and communication links that are relevant for said specific device or family of devices.

Examples of parameters that can be read or set include physical parameters such as a temperature, a velocity, or a fluid level, and system parameters such as a memory usage, a clock speed, a disk usage, a list describing active processes etc. A set of parameters that relate to an intelligent device defines a status of said device. The values of these parameters are stored in variables.

A data processing system 202 comprises a configuration file 205 that comprises intelligent device 201 dependent configuration data. The purpose of this configuration file 205 is to describe what operating parameters are relevant for a given intelligent device 201 in the context of service. Preferably, a configuration file 205 is represented using a well-structured format.

An example of a part of the contents of such a configuration file 205 is given below:

```
 <device="device201">
   <property name="temperature" />
   <property name="conductivity" />
 </device>
```

What the content of this file means is that a status of a device 201 identified as "device201" is described by means of a first parameter stored in a variable named "temperature" and a second parameter stored in a variable named "conductivity".

A data representation that is well-structured enables by means of a parsing algorithm to unambiguously derive which values belong to which variables. One possible approach to achieve this objective is by having the value of each variable preceded by a tag that describes said variable. Examples of well-structured data representations include self-describing languages, such as XML.

In general, an agent is a software entity that is capable of acting with certain degree autonomy to accomplish certain tasks on behalf of its user.

According to the invention, an agent tool 204 is designed to communicate data referring to a status of an intelligent device 201 with a collector tool 203, for example using a network or by exchanging status messages that are stored in files of which the path is known to both an agent and a collector tool.

According to one aspect of the current invention, an agent tool 204 is capable of exchanging status messages in a well-structured form with a collector tool 203.

An example of part of the contents of a status message that is exchanged between a collector tool 203 and an agent tool 204 that represents a device 201 could be as follows:

```
 <device="device201">
  <temperature> 20 </temperature>
  <conductivity> 650 </conductivity>
 </device>
```

What the content of this message means is that a description of the status of an intelligent device 201 named "device201" includes a variable named "temperature" having a value 20 and a variable named "conductivity" having a value 650.

According to another aspect of the current invention, an agent tool 204 is capable to interpret said well-structured data.

The interpretation of a status message is made possible by combining data in a status message with data in a configuration file 205. Specifically, the data in said configuration file 205 informs an agent 204 on what variables are to receive a value when a status message is interpreted.

The interpretation can also involve selecting and holding the value of a specific variable. Referring to the above example, the value of a variable named "temperature" may be selected and hold for further use in a method.

According to a preferred embodiment of the current invention, an agent tool 203 is also set up to request and obtain data from a service server 280 and to post interpreted data referring to a status of an intelligent device 201 to said service server 280. The data that is requested from service server 280 can contain instructions to the agent tool, for example an instruction to post a status related to the device it represents. According to a preferred embodiment, this requesting of data from said service server 280 is repeated periodically, for example every minute.

Optionally, an agent 203 is also capable to collect and monitor a status of said intelligent device.

A data processing system 202 can be any suitable intelligent device capable of executing software and of exchanging data with an intelligent device or with another data processing system. Examples include a workstation, a laptop or a handheld computing device. Typically, but not necessarily, such a data processing system 202 also comprises input and output means for interacting with a human operator, such as a keyboard, a mouse pointer and a display or printer.

In a similar way as the intelligent device 201, intelligent devices 211 and 221 are connected to data processing systems 212 and 222 on which collector tools 213, 223 and agent tools 214, 224 are running. The data processing system 212 is connected to the same local network 271 as the data processing system 202, while the data processing system 242 is connected to another local network 273 and the data processing system 222 is connected to yet another local network 272.

Figure 2 also shows a first service operator 231 sitting near a first service station 232 at said second geographical location 220. A service client tool software 233 is running on the service station 232. A service operator 231 can interact with a service station 232 in the usual way, for example using input means such as a keyboard and a mouse pointer to input data to the service station 232 and a using output means such as a display device or a printer to receive data from a service station 232.

Said service station 232 is connected to a local network 272.

In a similar way as the first service operator 231, a second service operator 241 is interacting with a second service station 242 at a third geographical location 240. The service station 242 has service client tool software 243 and is connected to a local network 273. In this specific example, the local network 273 contains only one service station 242, but in general multiple service stations can be connected to said local network 273.

A service server 280 contains a service tool 281 to enable a service operator 231, 241 to perform service. Said service tool 281 is preferably set up as a client-server application, even more preferably as a web-application. It comprises a service server tool 282 that runs on a service server 280 and service client tool executable software 284, which is available for download through a local or global network 270, 271, 272, 273 on the service stations 232, 242 so that it can run as a service client tool application 233, 243 on said stations. This approach has the advantage that only one service tool 281 needs to be maintained, and yet that the same tool is available on many service workstations that are connected to a service server 280 through a network 270, 272, 272, 273.

A service server 280 is also set up to send data to an agent tool 204, 214 224, for example an instruction to an agent tool 204 to post to said service server tool 280 data related to a status of an intelligent device 201 that said agent tool 204 represents.

Correspondingly a service server 280 is set up to receive data from an agent tool 204, 214, 224, for example data related to a status of an intelligent device 201 that was earlier requested.

Additionally, a service server 280 contains a work list 282, said work list comprising identifiers of intelligent devices 201, 211, 221 that need service. Said service server 280 can also store the status of a device in a database 285 for immediate or later inspection or for the purpose of automatic monitoring. Said service server 280 preferably also manages access privileges, including passwords to manage access by service operators 231, 241 and including additionally access privileges to agent tools 204, 214, 224.

A local network 271, 272, 273 enables to connect multiple data processing systems over the same link such as an Ethernet link or a WiFi link. For this purpose, each system is preferably assigned a unique identifier, for example an Internet Protocol (IP) address. Each system can transmit packets of data to another system on the same local network. This is achieved by adding to each packet of data the IP address of both the sender and the destination system.

A transmission control protocol, for example TCP, ensures that all the data packets being sent by a first specific system on the network arrive error free and in the right order at a second specific destination system. This transmission control protocol also enables that multiple devices can communicate with each other virtually at the same time and sharing the same network.

The transmission control protocol additionally enables that multiple applications on the same or different systems can concurrently communicate through the network. To keep data used by different applications separate, the applications communicate through different ports. For a number of common network services, such as for example sending or receiving binary files, sending or receiving e-mail messages, publishing or requesting a web-page or form, etc. preferably consistently the same ports are used. Special ports are also reserved for the secure transmission data over a network.

The local networks 271, 272 and 273 are preferably connected with each other by means of a public network 270. A first example of a public network is the Internet. A second example is public switched telephone network system in combination with ISDN service.

The connection between a local network 271 and a public network 270 preferably uses an intermediary firewall 250 and router 260.

In general, the purpose of a firewall 250 is to restrict the access that a service or application on a system that is connected to a public network has to a service or application on a system that is connected to a local network. This is achieved by allowing communication between both applications only through specific ports that are under control of the firewall. The firewall selectively opens and closes ports for said application on a system connected to said local network and avoids that unwanted services gain access to said application.

In general, the purpose of a router is to translate the network protocols and system identifiers of a local network into network protocols and system identifiers of a public network and vice versa.

The connection of a local network the Internet is optionally realized through an additional intermediate router and the local network of an Internet Service Provider (ISP).

Similar to the firewall 25 and the router 251, firewalls 251, 252 and routers 261, 262 are preferably used to connect the local networks 271 and 272 to the public network 270.

In summary, the local and global network links and protocols enable applications running on multiple data processing systems such as computers and intelligent devices to reliably exchange data.

Referring to Figure 2, service client tools 233, 243 can reliably exchange data with service server tool 283, and service server tool 283 can reliably exchange data with agent tools 204, 214 and 224 through local and global networks 270, 271, 272 and 273. Preferably the data is exchanged between these applications in a secure way and in a way that also transparent for firewalls 250, 251, 252.

According to a preferred embodiment this objective is achieved by exchanging data using a "Simple Object Access Protocol" (SOAP). The SOAP protocol is maintained by the "XML Protocol Working Group of the World Wide Web Consortium".

### description of a method

A method according to the current invention preferably assumes an initial state in which agent tools 204, 214, 224 runs on hosts 202, 212, 222 and periodically, for example every minute, request data over network 270, 271, 272, 273 from a service server tool 283. In the remainder of the text this periodical requesting of data is also referred to as polling. Optionally, collector tools 203, 213, 223 are also initially running.

A typical first step consists of formulating a service request. A service request can have different sources. A first possibility is that an end-user initiates a service request, for example, by reporting a malfunctioning of an intelligent device. Another possibility is that a service server 280, which stores and monitors the status of one or more intelligent devices 201, 211, 221 initiates a service request based upon detection of a certain pattern of the status of a device, for example when a device parameter exceeds multiple times a certain predefined threshold.

An operator 231 responds to a service request by starting up a service client tool 233 on service station 232. This is preferably achieved by entering, for example in a web browser, the address of service client tool executable code 282 residing on a service server 280. After download, a service client tool 233 application starts up and connects to the service server tool 283 on service server 280. This step preferably involves an authentication step. The authentication can be managed by intermediate negotiation with service server 280 on which a list with authorized service operators and their corresponding passwords are stored in a database 285.

In a next step a service operator 231 enters an identification code for an intelligent device that needs service. This can be done by entering directly said identification code, or by picking an intelligent device from a pick list. For example, a service operator 231 can pick device 201 for service. Optionally the selection of intelligent device 201 also comprises checking in database 285 on service server 280 if said intelligent device 201 is authorized for service.

In a next step an identification code of a selected device 201 is put in a work list 284 on service server 280. The effect of this selection is that next time when an agent tool 204 representing an intelligent device 201 polls service server tool 283, data is made available by service server tool 283 to agent 204 that includes an instruction to post a list of parameters of device 201 that agent 204 is representing.

Agent tool 204 reacts to this instruction to post a list of parameters by starting up collector tool 203, provided that agent tool 204 had not done so previously.

This starting up of collector tool 203 preferably comprises a number of sub-steps. A first sub-step comprises that agent tool 204 consults a registry on workstation 202 to identify a path where a collector tool 203 executable code resides. Another sub-step comprises that agent tool 204 consults said registry to identify a path where both collector tool 203 and agent tool 204 can read and write data for the purpose of exchanging status messages. Alternatively a different kind of communication channel is specified. Yet another sub-step comprises that agent tool consults said registry to identify a path of an intelligent device 201 dependent configuration file 205. Additional sub-steps comprise that collector tool 205 is started up and that the configuration file 205 is read by agent tool 203.

As previously mentioned, a configuration file 205 comprises a list of parameters that describe a status of an intelligent device 201. This list of parameters is posted by agent tool 204 to service server tool 283.

The service server tool 283 in turn makes the list available to service client tool 233 for display, for example as a web form. The form preferably displays to service operator 231 all the parameters that define a status of the selected intelligent device 201 and preferably includes for each parameter a check box.

A service operator 231 can select one or more a parameters by checking one or more boxes and posting the form to the service server tool 283.

A next time that agent 204 polls service server 283, said service server 283 makes data available to said agent 204 that includes an instruction to said agent 204 to post to service server 280 a full or a partial status containing the values of said selected parameters.

Agent tool 203 acts upon this instruction by obtaining a status from collector tool 203, interpreting said status in view of the requested parameters by filtering out the selected parameters and their values, and posting them to service server 280. Service server tool 280 in turn makes the values of the requested parameters available to the service client tool 233.

Optionally, this process is process is repeated for the same or a different set of parameters.

This process of inspecting a status or a partial status of intelligent device continues until a service operator 231 decides that the identification code of an intelligent device is taken off the work list. From that moment on a data request by an agent tool 204 will no longer result in instruction to said agent tool to post a full or a partial status. In that case a collector tool 203 is also preferably shut down.

### abstraction

The term "service" should be broadly interpreted in that it not only means repair or maintenance of an intelligent device but also data mining of parameters and upgrades of the software and or firmware. An example of data mining parameters is for example to check the configuration settings or the software version of a single or a set of intelligent devices. Another example of data mining parameters is to check the usage a single or a set intelligent devices. The usage can be the usage of a consumable material or the usage of a consumable software license.

The term "service tool" should also be broadly interpreted. While it has been described in a preferred embodiment as a software application that interacts with a service operator, it should also include an autonomous software application, such as for example a software agent. Such an agent can cane take over a number of tasks of a service operator such as for example logging or monitoring a status of an intelligent device or a set of intelligent devices.

The term "service operator" should not be interpreted in a strict meaning. Anyone who is authorized to service, maintain, test or inspect an intelligent device qualifies as a service operator. This includes, for example, software development engineers. It may also include a data processing system such a service server gaining access to an intelligent device, for example for the purpose of collecting data.

The invention is not limited to the number of geographical locations shown in Figure 2 and it is possible to include more intelligent devices at more geographical locations.

While the embodiment has been specifically described in the context of servicing intelligent devices that are designed for use in the graphic arts industry, the invention should not be limited thereto. Other examples of intelligent devices include a computer such as a workstation, a laptop or a handheld computer on which an operating system and an application program are running. Yet other examples of intelligent devices include home appliances such as washing machines, dishwashers, entertainment systems, climate control systems, navigation systems, domotics applications, automotive motor management systems etc.

An embodiment of a method according to the current invention has been explained in the context of a configuration shown in Figure 2 and specifically for the servicing of a specific device 201 by a specific operator 231. However, a person skilled in the art understands that many more similar configurations exist that functionally work in a similar way and that fall well within the objects of the current invention.

The described embodiment was described in the context of obtaining a status of an intelligent device. However, it should be clear to a person skilled in the art that the same system and method can be used to set a status of an intelligent device, for example by setting a set point for a temperature, a velocity or a position. In that case the data that is obtained by an agent tool 201 from a service server application contains an instruction not to post a status but to set a status.

The term "interpreting well-structured data" should not be construed as restricted to the selection of a specific parameter or set of parameters. It could also include a processing of one or more parameter values. A first example includes the conversion of a temperature parameter value expressed in degrees Fahrenheit into a corresponding temperature parameter value expressed in degrees Celsius. Another example includes the processing of a flow parameter value and a time parameter value in a volume parameter value. Yet another example includes analyzing and processing a set of parameter values into a logical state. The logical state can for example indicate whether or not said intelligent device needs a service intervention.

## Claims

1. A system for managing intelligent devices (201, 211, 221) by using a service tool (281), the system comprising:
- an intelligent device (201, 211, 221) having a status,
wherein said intelligent device (201, 211, 221) comprises means for communicating data referring to its status with a collector tool (203, 213, 223),
wherein said collector tool (203, 213, 223) comprises means for communicating well-structured data referring to said status with an agent tool (204, 214, 224),
wherein said agent tool (204, 214, 224) comprises means for communicating data over a network (270, 271, 272, 273) with said service tool (281);
the system being **characterized in that**:
- it additionally comprises configuration data (205, 215, 225) for configuring said agent tool (204, 214, 224);
- said agent tool (204, 214, 224) comprises means for interpreting said well-structured data into interpreted data based on said configuration data (205, 215, 225);
- said data that is send between said agent tool (204, 214, 224) and said service tool (281) is based on said interpreted data.

2. A system according to the previous claim, wherein said service tool (281) comprises a service server tool (283) running on a service server (280) and a service client tool (282, 233, 243) running on a service station (232, 242), said service server (280) and said service station (232, 242) being connected by a network (270, 271, 272, 273).

3. A system according to anyone of the previous claims, wherein said service tool is a software agent.

4. A system according to anyone of the previous claims, wherein said system additionally comprises a registry for initializing said agent tool (204, 214, 224) and said collector tool (203, 213, 223).

5. A system according to anyone of the previous claims, wherein said well-structured data is represented in an extensible mark up language such as XML.

6. A system according to anyone of the previous claims additionally wherein said network (270, 271, 272, 273) comprises a public network (270) such as the internet for sending said data between said agent tool (204, 214, 224) and said service tool (281).

7. A system according to anyone of the previous claims additionally comprising a service server.

8. A system according to anyone of the previous claims additionally comprising a service station.

9. A system according to the claims 1 to 8 wherein said intelligent device is an inkjet printing device.

10. A system according to anyone of the claims 1 to 8 wherein said intelligent device is a plate-setter device.

11. A method for servicing an intelligent device (201, 211, 224) using a service tool (281), the method comprising the steps of:
- communicating well-structured data between a collector tool (203, 213, 223) and an agent tool (204, 214, 224), wherein well structured data refers to a status of said intelligent device (201, 211, 221);
the method **characterized in that** it further comprises the steps of:
- reading configuration data (205, 215, 225) for configuring said agent tool (204, 214, 224);
- configuring said agent tool (204, 214, 224) based on said configuration data (205, 215, 225);
- having said agent tool (204, 214, 224) said well-structured data interpreted to obtain interpreted data based on said configuration data (205, 215, 225);
- communicating said interpreted data between said agent tool (204, 214, 224) and said service tool (281);

12. A method according to claim 11 wherein said interpreting includes a data reduction step.

13. A method according to the claims 11 to 12, wherein said communicating said interpreted data between said agent tool (204, 214, 224) and said service tool (281)includes the steps of:
- communicating said interpreted data between said agent tool (204, 214, 224) and a service server tool (283) running on a service server (280);
- communicating said interpreted data between said service server tool (283) and a service client tool (282, 233, 243) running on a service station (232, 242) over a network (270, 271, 272, 273).

14. A method according to anyone of the claims 11 to 13, additionally comprising a step of reading a registry for initializing said agent tool (204, 214, 224) and said collector tool (203, 213, 223).

15. A method according to anyone of the claims 11 to 14, wherein said well-structured data is represented in an extensible mark up language such as XML.

16. A method according to anyone of the claims 11 to 15 wherein said communicating said interpreted data between said agent tool (204, 214, 224) and said service tool (281) is established by means of an intermediate service server (280).

17. A data processing system comprising means set up for carrying out the steps of the method according to any one of the claims 11 to 16.

18. A computer program comprising computer program code means adapted to perform the method according to any one of the claims 11 to 16 when said program is run on a computer.

19. A computer readable medium comprising program code adapted to carry out the method according to any one of the claims 11 to 16 when run on a computer.
